# EUROPEAN PATENT SPECIFICATION

(11) **EP 1 724 038 B1**
(45) Date of publication and mention of the grant of the patent: **22.10.2008**
(21) Application number: 06380119.5
(22) Date of filing: 18.05.2006
(51) Int. Cl.: B23B 5/16

(54) **Portable lathe**
Tragbares Drehwerkzeug
Dispositif de tournage transportable

(30) Priority: 20.05.2005 ES 200501156 U
(43) Date of publication of application: 22.11.2006
(73) Proprietor: Hermanos Alfaro, S.L., 36213 Vigo Pontevedra (ES)
(72) Inventor: Alfaro Perez, José, 36213 Vigo-Pontevedra (ES)
(74) Representative: Temino Ceniceros, Ignacio

(56) References cited:
- DE-U1- 8 905 157
- US-A- 3 744 356
- US-A- 4 050 335
- US-A- 4 411 178

## Description

### OBJECT OF THE INVENTION

This invention is a portable lathe, whose purpose is to carry out machining work on flanges, whether these be circular or square, which are locked to the base or to the ends of tubes with large diameters, such as the ones that form the seating for the columns of wind towers, the seating for crane flanges, the seating for the azimuthal propellers used for ships, etc, flanges that have to be planned so that they are perfectly seated, as well as drilled or screwed for attachment purposes, or even supported so that their concentricity is perfect.

The object of the invention is to provide a machine or portable lathe that is mounted on the inside of the flange, which enables the user to comfortably and efficiently carry out the different types of machining activities that are referred to above. A lathe according to the preamble of claim 1 is known from US 3 744 356.

### BACKGROUND TO THE INVENTION

Portable milling machines are available that can turn, mill and true up diameters ranging from 762 mm to 3,048 mm. There are also devices that can do the same with greater diameters by supporting the machine on the outer face of the flange.

However, in the case of many flanges apart from the above-mentioned turning, milling and truing up operations, it is also necessary to drill holes in them. The drilling process has to be exact in the sense that the drill holes have to be uniformly distributed throughout the diameter of the flange.

No invention is known that can perform these operations simultaneously for diameters that are greater than 4,000 mm, by means of a securing system inside the flange that enables the machine to reach all the parts thereof, so that the user can operate the machine in any position, either vertically or horizontally.

### DESCRIPTION OF THE INVENTION

The lathe that is the object of the invention has been devised to overcome the problem explained above, and it is based upon a series of characteristics that enable the user to carry out the machining work on flanges, after having attached the lathe itself to the interior of the flange.
The problem is solved by a lathe according to claim 1.

The lathe is also equipped with a series of triggers that enable the user to establish the concentricity of the lathe itself with respect to the flange, and whose concentricity will be necessary in certain cases depending on the type of work that is going to be undertaken, in such a way that if the crown moves to the left or to the right, or if it moves forwards or backwards, depending on requirements, assisted by the aforementioned triggers, it is possible to obtain the correct concentricity for the lathe itself with respect to the flange.

Furthermore, the head is equipped with a motor that, when it is started up, transmits the torque not only to the aforementioned head but also to the tool that is mounted upon it, all of this in such a way that the advancing table to which that head belongs manages to get the tool to begin the machining process, in combination with the axial spindle that, rotating to the left or to the right, causes the head itself to move in an upward or a downward direction.

Furthermore, the gripping devices that secure the lathe to the flange, are formed by a sleeve inside which a piston or rod is assembled on which a screw-on nut is placed, whose rod or piston is equipped at one of its ends with a device for supporting the flange, whereas the other end bears a spring and a safety washer, in such a way that if a jet of fluid (which could be oil) is applied to the sleeve, this will cause the rod or piston to move, against the action of a spring situated at the protruding end on the outside of the rod, this movement also affecting the nut that is mounted on the piston or rod and the end supporting element, in such a way that as soon as what is considered to be a suitable tightness has been achieved, all that has to be done is screw the nut up tight until it comes up against the sleeve, at which point the hydraulic gripping device is attached to the flange, thus firmly securing the lathe inside the flange.

### DESCRIPTION OF THE DRAWINGS

A set of drawings that is merely illustrative and in no way limiting has been enclosed to supplement the description that is being made, and these drawings have been included to help to make it easier to understand the characteristics of the invention, in accordance with a preferred embodiment thereof. The set of drawings comprises the following figures:
Figure 1.- This shows an isometric perspective that gives a general view of the portable lathe that is the object of the invention.
Figure 2.- This shows a side elevation view of the way the portable lathe is positioned inside the flange concerned, this being attached to the respective frame.
Figure 3.- This shows a profile view of the hydraulic gripping device that is used to secure or immobilise the portable lathe inside the flange.

### REALISATION OF A PREFERRED EMBODIMENT OF THE INVENTION

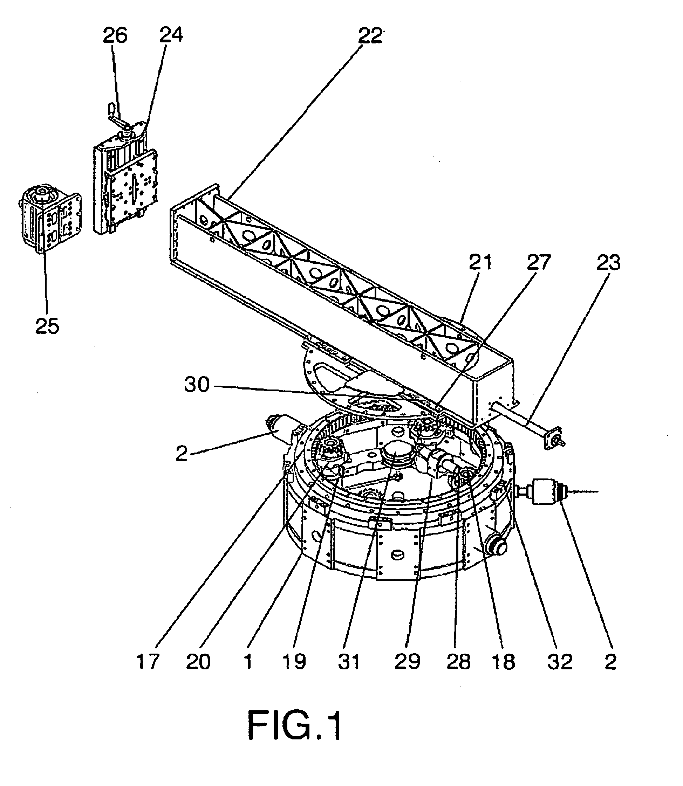

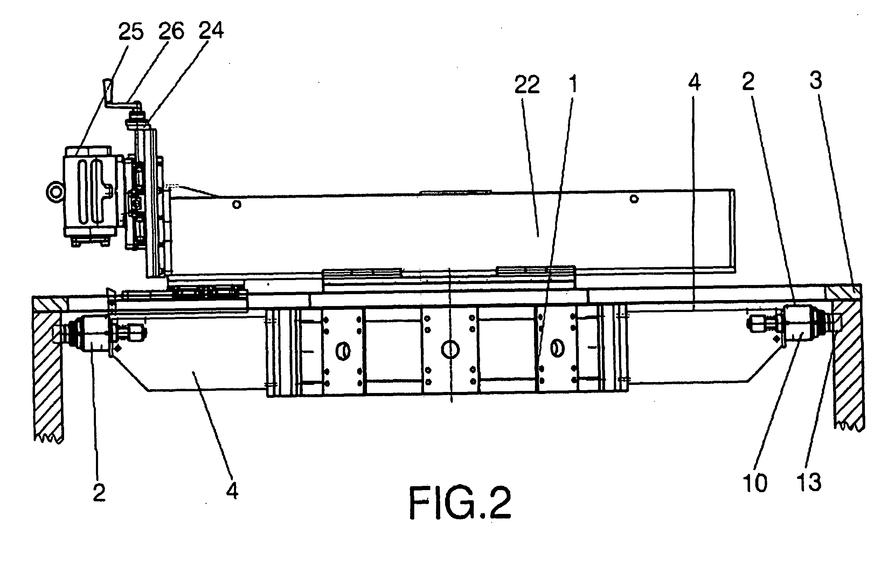

As can be seen from the figures referred to above, the portable lathe that is the object of the invention comprises a frame (1) on which a series of hydraulic gripping devices (2) are suitably attached, by means of which it is possible to secure and immobilise the entire lathe in the flange (3) inside which the user wishes to carry out the machining work concerned, in such a way that those gripping devices (2) can either be directly fixed to the frame (1), as can be seen in Figure 1, or be fixed with the interpositioning of supplementary feet (4), as can be seen in Figure 2.

Whatever the case may be, each gripping device (2) comprises a sleeve (5) with a screw-on neck (6) so that it can be mounted and attached, either directly onto the frame (1), or directly on the supplementary feet (4) that protrude from the frame itself (1), this sleeve (6) having a radial hole (7) through which a fluid, such as oil, can be injected under pressure, inside which there is a movable piston or rod (8) that protrudes from it, through the neck (6), emerging in an elongated section (8') on which there is a spring (9), which is held in place by a sealing cover (10) secured in place with a screw (11) onto the section (8') of the rod (8), and whose cover (10) will serve as a buffer, as will be explained below.

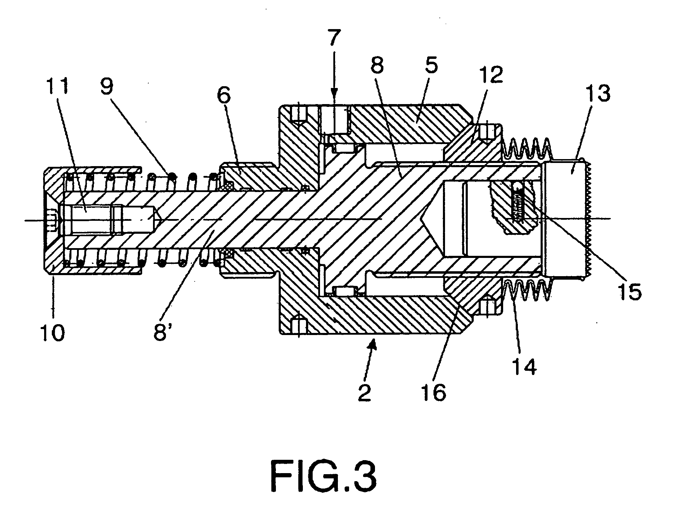

A nut (12) is screwed onto the opposite end of the rod or piston (8), which is provided with a supporting device (13) on its unattached end, and a bellows (14) is positioned between this and the nut (12), and the supporting device (13) is fixed in a partially blocked hole in the rod (8) by means of a keep pin (15), as can clearly be seen in Figure 3.

The functionality of the gripping device concerned is as follows:
When the oil or another fluid is injected under pressure through the hole (7) in the sleeve (5), this causes the rod (8) to move forward, and with it the nut (12) and the supporting device (13) as well, against the action of the spring (9), the latter becoming compressed as the rod (8) advances, thereby also causing the cover (10) to move, until it comes up against the end of the neck (6) with the forward movement of the cover with the rod (8).

As soon as the right pressure has been obtained with that forward motion, the nut (12) is screwed as has already been stated, until it comes up against the sleeve (5), that is to say, until it makes contact with the oblique surface (16) of the nut (12) itself and of the sleeve (5), as can be seen in Figure 3, thereby ensuring that the rod (8) does not move back, thereby avoiding that with the bellows particles of dirt don't get inside.

Going back to the lathe itself, a crown (17) is set inside it engaged with a cog (18), which is driven into movement by one or more hydraulic motors (19) or servomotors, that are attached to the frame itself (4) with a clamp (20). A cover (21) is to be provided at the top of the crown (17), on which a truck (22) is mounted, equipped with an axial spindle (23), and an advancing table (24) is connected to this truck (22) to which a head (25) is attached that holds the work tool concerned, this head (25) being provided with a motor to drive the tool.

Therefore, when the motor or motors (19) is/are started up, the rotation of the cog (28) brings about its engagement with the crown (17) and when the latter revolves, at the same time as the cover (21) because it is locked together with the crown (17) it will also rotate and with it the ram (22), in such a way that the driving of the spindle (23) will give rise to an upward or downward movement of the table (24), depending on the direction in which the spindle (23) is turned, and thus the head (25) that bears the tool will move in the same direction, and this tool could be a drill, a bit, a milling cutter, a thread tap, or any other type of tool that can be attached to the head (25). The spindle (23) is driven by a crank handle (26).

Going back to the device that comprises the truck (22) on which the aforementioned spindle (23) is mounted, it must be pointed out that it is attached to the cover (21) with runners (27) that enable the aforementioned truck (22) to move axially with the aid of the spindle (23), in such a way that when the spindle (23) rotates, driven by the crank handle (26), the truck (22) will either move forwards or backwards, and so will the head (25). A nut (28) is associated with the spindle (23), and this nut (28) is mounted on a box or nut holder (29), which is attached to the cover (21) on which the truck (22) is mounted, the special feature of this being that the latter is attached, once the specific and desired position is reached, by means of a braking device (30), by merely tightening a screw that brings pressure to bear on the truck guideline, thereby preventing it from moving forwards or backwards.

In such work as drilling and tightening screws, for example, which require great precision in boring the holes at specific points, the rotating angle must obviously be exact, and this precision is achieved by using an encoder (31) positioned inside, which enables the user to know the degrees that are being turned at any given time, and so the user can know at which exact point the drilling or screwing has to take place, this encoder (31) being screwed onto the revolving cover (21).

Finally, it must be pointed out that if the user requires the lathe to be concentric inside the flange (3), a series of triggers (32) are used that contain a threaded keep pin, which can make the crown (17) move, so the truck (22) will also move, while the frame (1) remains stationary, allowing the centre of the crown (17) to move so that it is positioned in the centre of the flange (3), and thus the lathe will be perfectly centred inside the flange.

Apart from the milling and drilling work, etc. that the lathe described can carry out, it can also perform supporting work, for the purpose of which all that is required is for the head (25) to be attached at the diameter required during the turning process, and that the supporting tool be adapted at the bottom of the truck (22), thus enabling the blade to enter the part that is to be machined merely by the user giving the head (25) a turn.

## Claims

1. A portable milling lathe, which is designed to enable its user to carry out machining activities on flanges, both circular and square and that belong to tubes of large diameters, enabling the user to carry out milling and planning activities, as well as drilling and threading, which is of the type that is equipped with a frame (1) that is provided with a series of hydraulic lateral gripping devices (2), the frame being attached to the side by pressure, a crown (17) being mounted on this frame that is made to rotate by means of a cog (18) that engages it and is operated by one or more hydraulic motors, in order to make a truck (22) revolve, which is linked to a head (25) that holds the work tool, this head belonging to an advancing table (24) fixed at that end of the truck, the truck being mounted on a cover joined to the crown itself, the truck bearing an axial spindle that when it rotates in either direction causes the advancing table to move upwards or downwards together with the head that holds the work tool, **characterised by** the fact that the aforementioned frame (1) is considerably smaller than the tube or flange to be machined, so that it can be fitted inside it, the series of hydraulic gripping devices (2) attachme the lathe on the inner surface of the flange to be machined and the aforementioned crown (17) for the angular movement of the truck engages internally with the cogs (18) that are driven by motors (19), so that those mechanisms are arranged inside the tube or clamp to be machined.

2. Portable lathe, as in the 1^{st} Claim, **characterised by** the fact that the advancing table is equipped with a crank handle to operate the spindle arranged axially on the truck, the latter being mounted on the cover locked to the revolving crown by means of runners that enable the truck to move forwards and backwards.

3. Portable lathe, as in the preceding claims, **characterised by** the fact that it is equipped with a nut connected to a box, or a nut holder screwed directly onto the cover fixed to the revolving crown, in such a way that the nut helps to move the spindle forward that drives the head bearing the work tool.

4. Portable lathe, as in the preceding claims, **characterised by** the fact that it is equipped with an encoder that invariably controls the degrees that the truck revolves, thereby enabling the user to accurately establish the points where the drilling or threading work has to be done.

5. Portable lathe, as in the preceding claims, **characterised by** the fact that outside the revolving crown it has some pins to ensure that the whole assembly is concentric with the flange, by moving the crown and thus the truck, with respect to the fixed frame.

6. Portable lathe, as in the preceding claims, **characterised by** the fact that the hydraulic gripping devices for immobilising the assembly on the inside of the flange, can either be fixed directly onto the frame or fixed to it by means of runners in the form of lateral elongations to the frame.

7. Portable lathe, as in the preceding claims, **characterised by** the fact that the hydraulic gripping devices are formed by a sleeve inside which there is a moveable piston or rod that emerges, at one of its ends, to the exterior of a section on which a spring is placed that is held by an end cover serving as a buffer, in the operations where the rod moves forward as a result of the thrust caused by a fluid being injected under pressure into the sleeve, which is supplemented with a nut mounted on the opposite section of the rod to which a supporting device is fixed in order to establish the correct pressure to make it possible to immobilise the lathe assembly with respect to the flange.

## Patentansprüche

1. Eine tragbare Fräs-Drehmaschine, die dazu konzipiert ist, ihrem Benutzer die Durchführung von Bearbeitungstätigkeiten an gleichermaßen kreisförmigen oder quadratischen Flanschen zu ermöglichen, die zu Rohren mit großen Durchmessern gehören und es dem Benutzer dabei gestatten, Fräs- und Plan- sowie Bohr- und Gewindeschneidarbeiten auszuführen, die sich **dadurch kennzeichnet, dass** sie einen Rahmen (1) besitzt ist, der mit einer Reihe seitlicher hydraulischer Spannvorrichtungen (2) ausgestattet ist, wobei der Rahmen seitlich durch Druck befestigt und auf diesem Rahmen eine Krone (17) montiert ist, die durch ein darin eingreifendes Zahnritzel (18) zum Drehen gebracht und durch einen oder mehrere Hydraulikmotoren angetrieben wird, um einen Schlitten (22) zur Drehung zu bringen, der mit einem Kopf (25) verbunden ist, der das Werkzeug hält, wobei dieser Kopf zu einem Vorschubtisch (24) gehört, der an diesem Ende des Schlittens befestigt ist, wobei der Schlitten auf eine mit der Krone selbst verbundene Abdeckung montiert ist und eine Axialspindel trägt, die bei Drehung in die eine oder andere Richtung bewirkt, dass sich der Vorschubtisch zusammen mit dem Kopf, der das Werkzeug hält, nach oben oder unten bewegt und die sich **dadurch kennzeichnet, dass** der erwähnte Rahmen (1) beträchtlich kleiner als das zu bearbeitende Rohr oder der zu bearbeitende Flansch ist, so dass er darin eingefügt werden kann und die Reihe der hydraulischen Spannvorrichtungen (2) hält die Drehmaschine auf der Innenfläche des Flansches an die bearbeitete und erwähnte Krone (17) und die Winkelbewegung des Schlittens greift innen in die Zahnritzel (18), die durch Motoren (19) angetrieben werden, so dass diese Mechanismen in das Rohr oder die Klemmbacke eingebracht werden, das/die zu bearbeiten sind.

2. Tragbare Drehmaschine wie in Patentanspruch 1, die sich **dadurch kennzeichnet, dass** der Vorschubtisch mit einem Kurbelgriff ausgestattet ist, um die axial auf dem Schlitten angebrachte Spindel zu bedienen, wobei dieser durch Gleitschuhe auf der Abdeckung montiert ist, die an der sich drehenden Krone befestigt ist, die es ermöglichen, dass sich der Schlitten vor- und zurückbewegt.

3. Tragbare Drehmaschine wie in den vorigen Patentansprüchen, die sich **dadurch kennzeichnet, dass** sie mit einer mit einem Kasten verbundenen Mutter oder einem Mutternhalter ausgestattet ist, der direkt auf die an der sich drehenden Krone befestigten Abdeckung geschraubt ist, so dass die Mutter dabei hilft, die Spindel vorwärts zu bewegen, die den das Werkzeug enthaltenden Kopf antreibt.

4. Tragbare Drehmaschine wie in den vorigen Patentansprüchen, die sich **dadurch kennzeichnet, dass** sie mit einem Drehgeber ausgestattet ist, der ständig die Grade kontrolliert, die sich der Schlitten dreht und es dem Benutzer **dadurch** gestattet, genau die Punkte festzulegen, wo die Bohr- oder Gewindeschneidarbeit durchzuführen ist.

5. Tragbare Bohrmaschine wie in den vorigen Patentansprüchen, die sich **dadurch kennzeichnet, dass** die sich drehende Krone außen Stege aufweist, um sicherzustellen, dass die Baugruppe konzentrisch zum Flansch steht, indem sie die Krone und damit den Schlitten gegenüber dem feststehenden Rahmen bewegen.

6. Tragbare Drehmaschine wie in den vorigen Patentansprüchen, die sich **dadurch kennzeichnet, dass** die hydraulischen Spannvorrichtungen zur Feststellung der Baugruppe auf der Innenseite des Flansches entweder direkt auf dem Rahmen befestigt oder durch Gleitschuhe in Form von seitlichen Verlängerungen am Rahmen befestigt werden können.

7. Tragbare Drehmaschine wie in den vorigen Patentansprüchen, die sich **dadurch kennzeichnet, dass** die hydraulischen Spannvorrichtungen durch eine Hülse gebildet werden, in der sich ein beweglicher Kolben oder Schaft befindet, der an einem seiner Enden in einem Abschnitt nach außen ragt, auf dem eine Feder angebracht ist, die durch eine Endabdeckung gehalten wird, die bei den Vorgängen als Anschlag dient, bei denen sich der Schaft nach vorn bewegt infolge des Schubs, der von einem Fluid verursacht wird, das unter Druck in die Hülse gespritzt wird, die von einer Mutter ergänzt wird, die auf den gegenüberliegenden Abschnitt des Schafts montiert ist, wo eine Haltevorrichtung befestigt ist, um den richtigen Druck festzulegen, damit es möglich wird, die Drehmaschinenbaugruppe gegenüber dem Flansch zu fixieren.

## Revendications

1. Tour portatif de fraisage, qui est conçu pour permettre à son utilisateur d'effectuer des travaux d'usinage sur des brides, rondes ou carrées, qui appartiennent à des tubes de grands diamètres, permettant de faire des travaux de fraisage et de planification ainsi que de perçage et de filetage, qui est de type équipé d'un châssis (1) qui est fourni avec plusieurs dispositifs de serrage latéral hydrauliques (2), le châssis étant fixé sur le côté par pression, la couronne (17) montée sur ce châssis étant faite pour tourner au moyen d'un pignon (18) sur lequel elle s'engrène et actionnée par un ou plusieurs moteurs hydraulique(s) afin de faire tourner un chariot (22) qui est relié à une tête (25) qui tient l'outil de travail, cette tête appartenant à une table d'avancée (24) fixée à cette extrémité du chariot, le chariot étant monté sur un couvercle uni à la couronne elle-même, le chariot portant une fusée axiale qui, quand elle tourne dans un sens ou dans l'autre, entraîne le déplacement ascendant ou descendant de la table d'avancée avec la tête qui tient l'outil de travail, **caractérisé par le fait que** le châssis susmentionné (1) est considérablement plus petit que le tube ou la bride à usiner, de sorte qu'il peut s'y insérer, la pluralité de dispositifs de serrage hydrauliques (2) fixe le tour sur la surface intérieure de la bride à usiner et la couronne susmentionnée (17) pour le mouvement angulaire du chariot s'engrène à l'intérieur avec les dents (18) qui sont entraînées par des moteurs (19), de sorte que ces mécanismes sont disposés à l'intérieur du tube ou collier à usiner.

2. Tour portatif conformément à la revendication 1, **caractérisé par le fait que** la table d'avancée est équipée d'une poignée de manivelle pour utiliser la fusée placée axialement sur le chariot, ce dernier étant monté sur le couvercle bloqué par la couronne tournante au moyen de patins qui permettent le déplacement en avant ou en arrière du chariot.

3. Tour portatif conformément aux revendications précédentes, **caractérisé par le fait qu'**il est équipé d'un écrou connecté à un boîtier ou d'un porte-écrou vissé directement sur le couvercle fixé à la couronne tournante, de telle manière que l'écrou aide à déplacer la fusée qui entraîne la tête portant l'outil de travail vers l'avant.

4. Tour portatif conformément aux revendications précédentes, **caractérisé par le fait qu'**il est équipé d'un encodeur qui contrôle invariablement les degrés de rotation du chariot, permettant ainsi à l'utilisateur de déterminer avec précision les points où le travail de perçage ou de filetage doit être effectué.

5. Tour portatif conformément aux revendications précédentes, **caractérisé par le fait qu'**a l'extérieur de la couronne tournante, il a des goupilles pour garantir que la totalité de l'ensemble est concentrique par rapport à la bride, en déplaçant la couronne et par conséquent le chariot, par rapport au châssis fixe.

6. Tour portatif conformément aux revendications précédentes, **caractérisé par le fait que** les dispositifs de serrage hydraulique d'immobilisation de l'ensemble à l'intérieur de la bride peuvent être soit fixés directement sur le châssis ou fixés sur celui-ci au moyen de patins sous forme de prolongements latéraux du châssis.

7. Tour portatif conformément aux revendications précédentes, **caractérisé par le fait que** les dispositifs hydrauliques de serrage sont formés par un manchon à l'intérieur duquel il y a un piston ou une tige à déplacement qui émerge, à l'une de ses extrémités, à l'extérieur d'une section sur laquelle est placé un ressort qui est tenu par un couvercle d'extrémité qui sert de butée dans les opérations de déplacement vers l'avant de la tige suite à la poussée causée par un fluide qui est injecté sous pression dans le manchon, qui est complété par un écrou monté sur la section opposée de la tige à laquelle un dispositif de support est fixé afin de déterminer la pression correcte qui rend possible l'immobilisation de l'ensemble du tour par rapport à la bride.
